# EUROPEAN PATENT APPLICATION

(11) **EP 1 676 754 A1**
(43) Date of publication of application: **05.07.2006**
(21) Application number: 05025537.1
(22) Date of filing: 23.11.2005
(51) Int. Cl.: B60R 21/16

(54) **Airbag and airbag module**

(30) Priority: 28.12.2004 JP 2004379929
(71) Applicant: TAKATA CORPORATION, Minato-ku, Tokyo 106-8510 (JP)
(72) Inventor: Kumagai, Masayoshi, Minato-ku Tokyo 106-8510 (JP); Abe, Kazuhiro, Minato-ku Tokyo 106-8510 (JP)
(74) Representative: Banzer, Hans-Jörg

(57) **Abstract**

In order to partition an airbag (10) into a first chamber (1) provided with an inflator (36) and a second chamber (2) surrounding the first chamber (1), to cause inflation of the second chamber (2) to be accomplished earlier, first and second inner panels (22A, 22B) are provided in an interior of the airbag (10), and the interior of the airbag (10) is partitioned into the first chamber (1) and the second chamber (2) surrounding the first chamber (1). The second inner panel (22B) is provided with communication ports (27) for bringing the first chamber (1) and the second chamber (2) into communication. The communication ports (27) are located on the side of a retainer (30) with respect to a surface of a steering wheel (50) on the side of a passenger. Exhaust gas from a gas exhaust port (36a) of an inflator (36) is directly supplied to the second chamber (2) via the communication ports (27).

## Description

The present invention relates to an airbag apparatus provided on a high-velocity moving body such as a vehicle for inflating an airbag in case of emergency such as collision and protecting a human body.

### Background Art

In order to protect a passenger in case of emergency such as collision of a motor vehicle, various types of airbag apparatus such as an airbag apparatus for a driver's seat are used. The airbag apparatus for a driver's seat includes an airbag formed by stitching peripheral edges of a front panel on the passenger's side and a rear panel on the opposite side. An inflator port for receiving a distal side of an inflator is provided at a center of the rear panel. The peripheral portion of this port is mounted to a retainer by bolts, pins, rivets or the like. The rear panel is provided with a vent hole for releasing gas in the bag and absorbing an impact when the passenger seated on the driver's seat strikes against the airbag.

In Japanese Unexamined Patent Application Publication NO. 1-311930, an airbag'provided with an inner panel (referred to as "inner air bag" in this publication) so as to extend between the inflator port on the rear panel and the front panel, whereby an interior of the airbag is partitioned into a first chamber at a center and a second chamber around the first chamber. The inner air bag is provided with a communication port for bringing the first chamber and the second chamber into communication. When the inflator is activated, the first chamber is inflated first, and then the second chamber is inflated subsequently.

### Disclosure of the Invention

### Problems to be Solved by the Invention

It is an object of the present invention, in an airbag having an interior partitioned into a first chamber and a second chamber, to cause inflation of the second chamber to be accomplished earlier.

According to the invention, this object is achieved by an airbag as defined in Claim 1 and an airbag apparatus as defined in Claim 2.

### Means for Solving the Problems

An airbag according to the present invention is an airbag for a driver's seat being inflated by gas from a gas generator comprising: a front panel to be disposed on an passenger's side; a rear panel to be disposed on an opposite side of the passenger, the front panel and the rear panel being connected to each other at peripheral edges thereof, an inner panel for partitioning an interior of the airbag into a first chamber at a center and a second chamber surrounding the first chamber; and gas generator insertion ports formed on the rear panel and the inner panel, the inner panel is formed with communication ports for bringing the first chamber and the second chamber into communication, and at least part of the communication ports are disposed on the opposite side from the passenger with respect to a surface of a steering wheel on the passenger side in a state in which the airbag is inflated.

An airbag apparatus according to the present invention is an airbag apparatus comprising: an airbag; a gas generator having a gas exhaust port, the gas generator being disposed at least a distal side thereof in the airbag and the gas exhaust port being disposed in the airbag, the airbag is the airbag according to the present invention described above.

### Advantages of the Invention

According to the airbag and the airbag apparatus in the present invention, since part of the communication ports are disposed on the opposite side from the passenger with respect to the surface of the steering wheel on the passenger side in a state in which the airbag is inflated, gas in the first chamber is supplied quickly to the second chamber, and the second chamber can be inflated in the early stage.

### Brief Description of the Drawings

Fig. 1 is a cross-sectional view of an airbag and an airbag apparatus according to an embodiment.
Fig. 2 is an exploded perspective view of the airbag and the airbag apparatus in Fig. 1.

### Best Mode for Carrying Out the Invention

Referring now to the drawings, an embodiment of the present invention will be described.

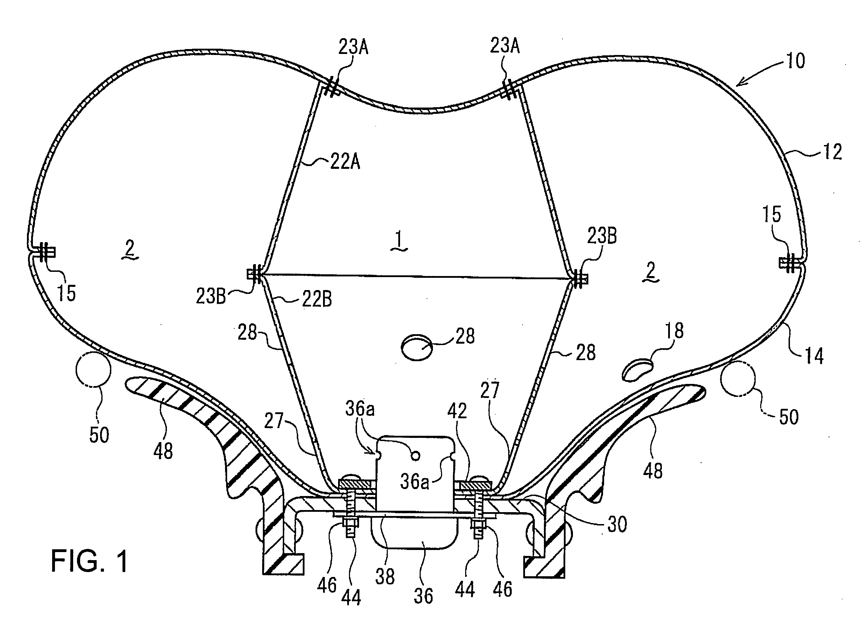

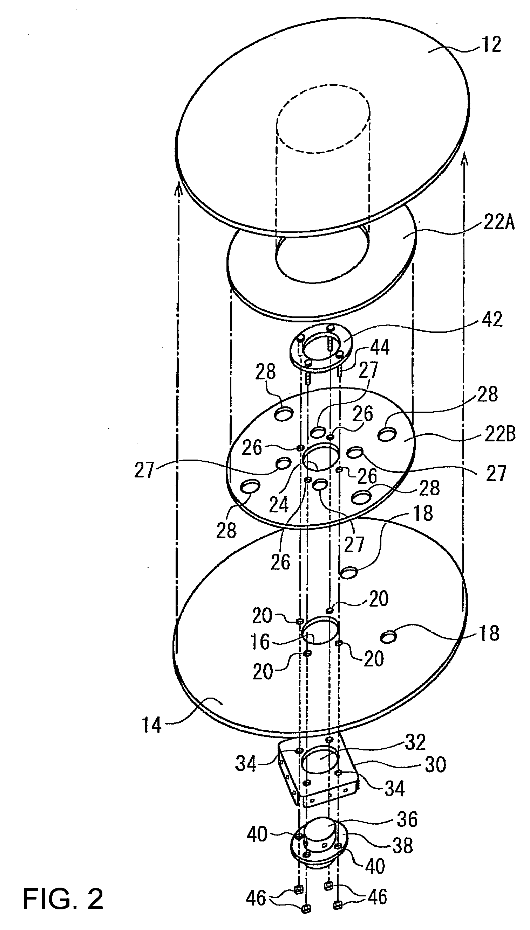

Fig. 1 is a cross-sectional view of an airbag for driver's seat of a vehicle and an airbag apparatus according to the embodiment of the present invention, and Fig. 2 is an exploded perspective view of the airbag and the airbag apparatus.

An airbag 10 includes a front panel 12, a rear panel 14, a first inner panel 22A, and a second inner panel 22B, which are formed of a circular woven cloth respectively. The front panel 12 and the rear panel 14 have the same diameter, and are formed into a bag shape by being stitched together at outer peripheral edge portions thereof by a seam 15 of yarn or the like. The stitched portion has an annular shape formed around the outer peripheries of the front panel 12 and the rear panel 14.

The rear panel 14 is provided with an inflator (gas generator) port 16 and a vent hole 18. The inflator port 16 is arranged at a center of the rear panel 14. Provided around the inflator port 16 are bolt insertion holes 20.

The first inner panel 22A and the second inner panel 22B are provided inside the airbag 10. The first and second inner panels 22A, 22B are disposed substantially concentrically with the front panel 12 and the rear panel 14, and outer peripheral edge portions thereof are stitched together by a seam 23B of yarn or the like. An inner peripheral edge of the first inner panel 22A on the side of the front panel 12 (a peripheral edge of the inner panel 22A on the distal side in a state in which the airbag 10 is inflated) is stitched with an intermediate portion between the center portion and the peripheral portion of the front panel 12 by a seam 23A of yarn or the like.

An inflator insertion port 24, which is disposed substantially concentrically with the inflator port 16 on the rear panel 14, is provided at a center portion of the second inner panel 22B on the side of the rear panel 14 (a portion on the rear end of the second inner panel 22B in a state in which the airbag 10 is inflated). These ports 16, 24 have substantially the same diameter. Provided around the port 24 on the inner panel 22B are bolt insertion holes 26 which are aligned with the bolt insertion holes 20 on the rear panel 14.

Communication ports 28 are provided on the second inner panel 22B at positions relatively close to the outer peripheral edge thereof, and communication ports 27 are provided on the inner peripheral side thereof. The communication ports 28 may be provided on the first inner panel 22A.

A peripheral edge portion of the inflator port 24 on the second inner panel 22B is aligned with a peripheral edge portion of the inflator port 16 on the rear panel 14, and then aligned with a peripheral edge portion of an inflator mounting port 32 of a retainer 30. Then, the peripheral edge portions of the inflator ports 24, 16 are fixed to the retainer 30 through the bolt insertion holes 26, 20. Accordingly, the peripheral edge portion of the inflator port 24 on the second inner panel 22B is connected to the peripheral edge portion of the inflator port 16 on the rear panel 14, the outer peripheral edge portions of the first and second inner panels 22A, 22B are connected together, and the inner peripheral edge portion of the first inner panel 22A is connected to the front panel 12.

The first and second inner panels 22A, 22B partition an interior of the airbag 10 into a first chamber 1 at a center and a second chamber 2 which surrounds the first chamber 1. The first chamber 1 is positioned inside the inner panels 22A, 22B.

The communication ports 27 are located on the opposite side from the passenger with respect to the surface of a steering wheel 50 on the passenger side in a state in which he airbag is inflated. In other words, in Fig. 1, the communication ports 27 are arranged below a virtual plane connecting an upper end surface of the steering wheel 50 in the drawing.

In this embodiment, the communication ports 27 are formed at positions on extensions of the gas discharging directions of an inflator 36, described later, disposed in the first chamber 1 via the inflator ports 16, 24, that is, at positions opposing gas discharge ports 36a of the inflator 36.

In this embodiment, as shown in Fig. 2, the communication ports 27 and the communication ports 28 are formed at regular intervals circumferentially of the airbag at four positions each. The communication ports 27 are shifted from the communication ports 28 in circumferential phase about a center of the airbag.

It is also applicable to attach reinforcing patches or the like at the peripheral edge portions of the ports 16, 24, the communication ports 27, 28 and/or the vent holes 18.

The retainer 30 for mounting the airbag 10 is provided with an inflator mounting port 32 at a center and bolt insertion ports 34 in the periphery thereof.

The inflator 36 has a substantially column shape, and is provided with the gas discharge ports 36a on a side peripheral surface on a distal side in a direction of a cylinder axis. In this embodiment, the gas discharge ports 36a are provided at regular intervals circumferentially of the inflator 36 at four positions. The inflator 36 is adapted to discharge gas from the gas discharge ports 36a in the discharging directions. A flange 38 for fixing the inflator is formed so as to project from the side peripheral surface at a midsection (rear side from the gas discharge ports 36a) of the inflator 36 in the direction of cylinder axis. The flange 38 is provided with bolt insertion holes 40. The inflator 36 is fitted to the inflator mounting port 32 of the retainer 30 at a distal side thereof.

When mounting the airbag 10 to the retainer 30, the peripheral edge portions of the inflator ports 16, 24 of the rear panel 14 and the second inner panel 22B are pressed against the peripheral edge portion of the inflator mounting port 32 of the retainer 30 by a holding ring 42. A distal side of the inflator 36 fitted to the inflator mounting port 32 is inserted into the first chamber 1 via the inflator ports 16, 24. The gas discharge ports 36a provided at the distal side of the inflator 36 oppose the communication ports 27 of the second inner panel 22B, respectively.

In this case, stud bolts 44 of the holding ring 42 are inserted into the bolt insertion ports 26, 20, 34, 40, and nuts 46 are tightened on distal ends thereof, so that the second inner panel 22B, the airbag 10, and the inflator 36 are fixed to the retainer 30. Then, the airbag 10 is folded and a module cover 48 is mounted to the retainer 30 so as to cover the folded body of the airbag 10, whereby the airbag apparatus is configured. The airbag apparatus is installed inside the steering wheel 50 of a motor vehicle.

Upon collision of the vehicle, the inflator 36 is activated and gas is exhausted into the airbag 10. The airbag 10, being inflated by the gas, presses and opens the module cover 48, and is deployed into a cabin of the vehicle to protect the passenger on the driver's seat.

In the airbag 10, since the communication ports 27 for bringing the first chamber 1 and the second chamber 2 into communication are disposed on the retainer 30 side with respect to the surface of the steering wheel 50 on the passenger side, the exhaust gas from the inflator 36 is introduced into the second chamber 2, and the second chamber 2 is inflated in the early stage.

In particular, according to the present embodiment, the communication ports 27 are positioned on the extensions of the gas discharging directions of the inflator 36 as shown in Fig. 1, the gas from the inflator 36 is directly discharged toward the portion near the communication ports 27 and then is flowed into the second chamber 2 from the communication ports 27. Therefore, since the discharged gas from the inflator 36 is flowed directly into the second chamber 2, the second chamber 2 is inflated extremely in the early stage.

When the passenger strikes against the inflated airbag 10, the gas in the first chamber 1 and the second chamber 2 flows out through the communication ports 28 or the vent hole 18, whereby an impact is absorbed.

The embodiment is only example of the present invention, and hence the present invention is not limited to the embodiment. For example, although four each of the gas discharge ports 36a and the communication ports 27 are provided in the above-described embodiment, the numbers of those are not limited to four. Although the communication ports 27 are arranged on the extensions in the gas discharging directions of all the gas discharge ports 36a of the inflator 36, the communication ports 27 may be arranged only on the directions of extensions of part of the gas discharge ports 36a. Alternatively, the part of the communication ports may be arranged at positions shifted from the directions of extensions of the gas discharge ports 36a, and there may exist a communication port which does not oppose the gas discharge port 36a.

Although the communication ports 28 are arranged at positions apart from the port 24 in the above described embodiment, the communication ports 28 may also be disposed on the retainer 30 side with respect to the surface of the steering wheel 50 on the passenger side.

In the present invention, a rectifier cloth for guiding gas from the inflator to the communication ports 27 may be provided in the first chamber 1.

Although the communication ports 28 are provided on the second inner panel 22B in the above-described embodiment, the communication ports 28 may be provided on the first inner panel 22A. The communication ports 28 may also be provided both on the first inner panel 22A and the second inner panel 22B. The communication ports 28 may be arranged at positions corresponding to the positions of the communication ports 27.

## Claims

1. An airbag for a driver's seat being inflated by gas from a gas generator (36) comprising:
a front panel (12) to be disposed on a passenger's side;
a rear panel (14) to be disposed on an opposite side of the passenger, the front panel (12) and the rear panel (14) being connected to each other at peripheral edges thereof,
an inner panel (22A, 22B) for partitioning an interior of the airbag (10) into a first chamber (1) at a center and a second chamber (2) surrounding the first chamber (1); and
gas generator insertion ports (16, 24) formed on the rear panel (14) and the inner panel (22B),
**characterized in that** the inner panel (22B) is formed with communication ports (27) for bringing the first chamber (1) and the second chamber (2) into communication, and at least part of the communication ports (27) are disposed on the opposite side from the passenger with respect to a surface of a steering wheel (50) on the passenger side in a state in which the airbag (10) is inflated.

2. An airbag apparatus comprising:
an airbag (10);
a gas generator (36) having a gas exhaust port (36a), the gas generator (36) being disposed at least at a distal side thereof in the airbag (10) and the gas exhaust port (36a) being disposed in the airbag (10),
**characterized in that** the airbag is the airbag (10) according to Claim 1.
